# EUROPEAN PATENT SPECIFICATION

(11) **EP 2 561 346 B1**
(45) Date of publication and mention of the grant of the patent: **01.07.2020**
(21) Application number: 11772453.4
(22) Date of filing: 14.04.2011
(51) Int. Cl.: G01N 33/00, G01V 5/00, G01T 3/00, G01T 3/06

(54) **RADIOACTIVE/NUCLEAR THREAT MONITORING USING LONG DETECTORS**
ÜBERWACHUNG EINER RADIOAKTIVITÄTS-/NUKLEARBEDROHUNG MITHILFE LANGER DETEKTOREN
SURVEILLANCE DES MENACES RADIOACTIVES/NUCLÉAIRES AU MOYEN DE DÉTECTEURS LONGS

(30) Priority: 19.04.2010 US 325783 P
(43) Date of publication of application: 27.02.2013
(60) Divisional application: 18187584.0
(73) Proprietor: Rapiscan Systems, Inc., Torrance, CA 90503 (US)
(72) Inventor: LANGEVELD, Willem Gerhardus Johannes, Menlo Park, CA 94025 (US)
(74) Representative: Barker Brettell LLP
(86) International application number: PCT/US2011/032440
(87) International publication number: WO 2011/133384

(56) References cited:
- JP-A- H0 980 157
- US-A- 4 320 380
- US-A- 4 634 568
- US-A- 4 634 568
- US-A1- 2004 140 421
- US-A1- 2005 120 778
- US-A1- 2005 244 116
- US-A1- 2005 244 116
- US-A1- 2008 036 597
- US-A1- 2008 316 017
- US-A1- 2010 008 666
- US-B2- 7 126 148
- JACOBSEN R G ET AL: "Beam loss monitors in the SLC Final Focus", 19890320; 19890320 - 19890323, 20 March 1989 (1989-03-20), pages 1539-1541, XP010081982,
- WIENANDS U ET AL: "Status of the high energy ring of the PEP II B-Factory", PROCEEDINGS OF THE 1995 PARTICLE ACCELERATOR CONFERENCE : PAPERS FROM THE SIXTEENTH BIENNIAL PARTICLE ACCELERATOR CONFERENCE, AN INTERNATIONAL FORUM ON ACCELERATOR SCIENCE AND TECHNOLOGY HELD MAY 1 - 5, 1995 IN DALLAS, T, IEEE, NEW YORK, US, vol. 1, 1 May 1995 (1995-05-01), pages 530-532, XP010165695, DOI: 10.1109/PAC.1995.504709 ISBN: 978-0-7803-2934-8

## Description

### FIELD OF THE INVENTION

The present specification relates generally to the field of radiological threat detection and more specifically to the use of Long Detector (LD) cables for detecting unshielded and/or lightly shielded radiological and/or Special Nuclear Materials (SNM).

### BACKGROUND OF THE INVENTION

Conventional radiological material and Special Nuclear Material (SNM) detection systems are typically designed for use along traditional cargo pathways, i.e. cargo entering a country, state or location through maritime and land points of entry.

What is needed, however, is a system capable of detecting the entry of such materials through terrestrial pathways, and in particular, between land-based border points of entry.

It is probable that radiological materials and SNM carried into countries across borders and other such pathways are lightly shielded or not shielded at all, leading to a detectable radiation signature.

US7126148 discloses a scintillator and photomultiplier tube in a teflon tube for detecting neutron radiation.In the literature Panovsky Long Ion Chamber cables are known.

The document: "Status of the High Energy Ring of the PEP II B-Factory", U.Wienands et.al., 1996 IEEE, discloses a Panovsky Long ion Chamber (PLIC) around the tunnel of the High Energy Ring which is used to monitor beam loss. Such PLIC cables are used and especially developed in connection with beam loss monitoring around or along accelerators.

Therefore, what is needed is a radiological threat detection system that can be implemented with minimal operational burden, which has effectiveness at ranges relevant for transport along terrestrial pathways, and is suitable for deployment in harsh land environments, which is often typical of border crossings, and that is operationally feasible and sustainable.

### SUMMARY OF THE INVENTION

The invention provides a radiological threat material detection system, according to claim 1 and a method of detecting radiological material according to claim 13. Further details are disclosed in the dependent claims.

The present specification discloses a radiological threat monitoring system capable of withstanding harsh environmental conditions, the system comprising: one or more Long Detector (LD) cables for carrying ionization current being induced therein by a radiological material emitting ionizing radiation, the ionizing radiation inducing a signal in a LD when the radiological material comes within a predefined distance of the LD; one or more base stations connected with the one or more LDs for measuring the induced signal, each base station recording the measured signal; and a central station in communication with the one or more base stations for gathering the recorded measurements.

Optionally, the radiological material is a fissile threat material such as a 'Special Nuclear Material' (SNM). The system is used for monitoring radiological materials being brought within a predefined distance of an area representing threat targets. The system is used for passive scanning of vehicular traffic. The LDs are deployed in the system by embedding within sections of road. The LDs are deployed in the system by laying the cables on ground, such as by attaching to stakes. The LDs are deployed in the system by hanging from poles. Each of the base stations comprises read-out electronics to measure the induced signal. The central station is in communication with the one or more base stations through a wired network. The central station is in communication with the one or more base stations through a wireless network. The central station is in communication with the one or more base stations through one or more fiber optic pathways. Each base station is powered by a rechargeable battery being recharged during periods of daylight by solar cells. The one or more base station is powered by an electrical grid.

Optionally, the one or more base station is unattended by a human operator, the base station being equipped with one or more infrared cameras for monitoring a predefined area visually. The system further comprises one or more sensors for detecting an attempt to tamper with the system. The system further comprises a sensor deployed in the one or more base stations for detecting a severing of a LD by: periodically sending a signal through the LD; determining if the signal is reflected by an end of the LD; detecting a severing of the LD if the reflected signal is not received at the sensor; determining a time difference between a time of sending the signal and a time of receiving the reflected signal; and detecting a severing of the LD if the reflected signal is received before a predefined time period, the predefined time period being dependent on a known length of the LD.

Optionally, the system further comprises a sensor deployed in each of a first base station and a second base station, the first and second base stations being connected to a first and a second end of a LD respectively, the sensors detecting a severing of the LD by periodically sending a signal from the first base station to the second and determining if the signal is received by the second base station within a predefined time. The base station periodically sends a predefined status message conveying a health status of one or more components of the base station to the central station, the central station determining a malfunctioning base station if the predefined status message is not received at one or more of predefined time intervals.

Optionally, three parallel lines of LDs are used for making the system triply redundant. The LDs are Panofsky Long Ion Chambers (PLICs), a PLIC being a gas-filled coaxial cable supplied with high voltage. The LDs are Panofsky Long Ion Chambers (PLICs), a PLIC being a gas-filled coaxial cable supplied with high voltage comprising at least one inner signal electrode concentrically surrounded by at least one outer high-voltage electrode, the inner and outer electrodes being separated by a spacer surrounding the inner electrode. The spacer is a ceramic material resistant to high voltages. The inner electrode is made of a conductive material. The spacer is filled with a radiation-ionizable dielectric at pressures in the range of 1 to 20 atmospheres, before being sealed. As an example not forming part of the present invention, the one or more LDs comprises a scintillating substance and one or more light-sensitive detectors arranged throughout the length of the one or more LDs, the light-sensitive elements being powered through one or more wires connected to at least one base station. The scintillating substance is a liquid scintillator. The light emitted by the scintillating substance is transmitted to the light-sensitive detectors by means of wavelength-shifting fibers. The scintillating substance comprises scintillating fibers.

The aforementioned and other embodiments of the present shall be described in greater depth in the drawings and detailed description provided below.

### BRIEF DESCRIPTION OF THE DRAWINGS

These and other features and advantages of the present invention will be appreciated, as they become better understood by reference to the following detailed description when considered in connection with the accompanying drawings:
FIG. 1 shows an embodiment of radiological threat monitoring system of the present invention deployed at a border crossing;
FIG. 2 shows a cross-sectional view of a Long Detector as employed in the present invention, which in one embodiment is a Panofsky Long Ion Chamber (PLIC) coaxial cable being used as a Long Detector; and
FIG. 3 shows a cross-sectional view of a Long Detector comprising a scintillating material, as an example not forming part of the present invention.

### DETAILED DESCRIPTION OF THE INVENTION

The present invention is directed towards a radiological threat detection system that can be implemented with minimal operational burden and is effective at ranges relevant for transport along terrestrial pathways. The radiological threat detection system of the present invention employs Long Detector (LD) cables and is suitable for deployment in harsh environmental conditions, generally found along state or international borders.

In one embodiment, the radiological threat detection system of the present invention comprises one or more Long Detector cables for carrying ionization current being induced therein by a radiological material emitting ionization radiation; one or more base stations connected with the one or more LDs for measuring the signal produced by the LD, each base station recording the measured signal; and a central station in communication with the one or more base stations for gathering the recorded measurements.

In one embodiment, the radiological material is a fissile threat material such as a 'Special Nuclear Material' (SNM).

In one embodiment, the system is used for monitoring radiological materials crossing state or international borders, whereby the LDs are deployed along state or international borders. In another embodiment, the system is used for monitoring radiological materials being brought within a predefined distance of an area representing threat targets, whereas in another embodiment, the system is used for passive scanning of vehicular traffic.

In one embodiment, the LDs are deployed in the system by embedding the LDs within sections of road. In another embodiment, the LDs are deployed in the system by laying on ground, such as by attaching to stakes. In yet another embodiment, the LDs are deployed in the system by hanging from commonly available poles.

In one embodiment, each of the base stations comprises read-out electronics to measure the signal produced by the LD. Also, in one embodiment, the central station is in communication with the one or more base stations through a wired network, whereas in another, the central station is in communication with the one or more base stations through a wireless network. In yet another embodiment, the central station is in communication with the one or more base stations through one or more fiber optic pathways.

In one embodiment, each base station is powered by a rechargeable battery being recharged during periods of daylight by solar cells. In another embodiment, the one or more base station is powered by an electrical grid. Further, in an embodiment, the one or more base station is unattended by a human operator, and is equipped with one or more infrared cameras for monitoring a predefined area visually.

In an embodiment, the system further comprises one or more sensors for detecting an attempt to tamper with the system. Also, in an embodiment, the system comprises a sensor deployed in the one or more base stations for detecting a severing of a LD by: periodically sending a signal through the LD; determining if the signal is reflected by an end of the LD; detecting a severing of the LD if the reflected signal is not received at the sensor; determining a time difference between a time of sending the signal and a time of receiving the reflected signal; and detecting a severing of the LD if the reflected signal is received before a predefined time period, the predefined time period being dependent on a known length of the LD.

In another embodiment, the system comprises a sensor deployed in each of a first base station and a second base station, the first and second base stations being connected to a first and a second end of a LD respectively, the sensors detecting a severing of the LD by periodically sending a signal from the first base station to the second and determining if the signal is received by the second base station within a predefined time.

In an embodiment, a base station periodically sends a predefined status message conveying a health status of one or more components of the base station to the central station, the central station determining a malfunctioning base station if the predefined status message is not received at one or more of predefined time intervals. In an embodiment, three parallel lines of LDs are used for making the system triply redundant.

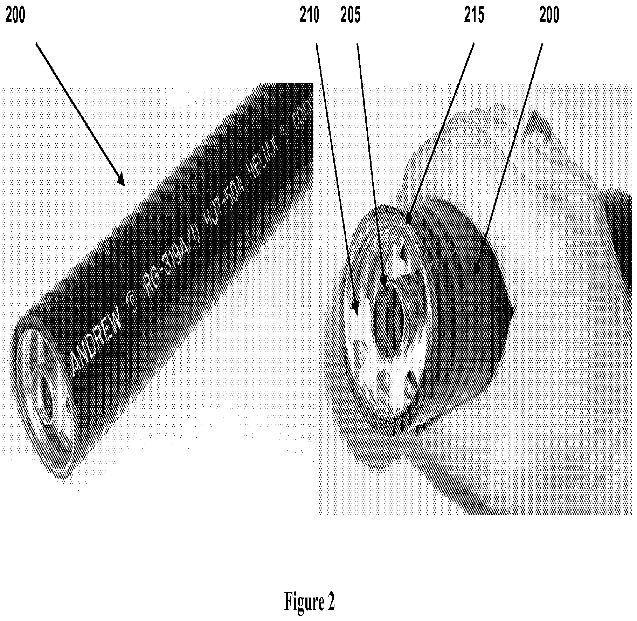

In an embodiment, the LDs are Panofsky Long Ion Chambers (PLICs), a PLIC being a gas-filled coaxial cable supplied with high voltage comprising at least one inner signal electrode concentrically surrounded by at least one outer high-voltage electrode. The inner and outer electrodes are separated by a spacer surrounding the inner electrode, increasing a number of inner and outer electrodes improving a sensitivity of the PLIC. In an embodiment, the spacer is a ceramic material resistant to high voltages. Also, in an embodiment, the inner electrode is made of a conductive material. In another embodiment, the spacer is filled with a radiation-ionizable dielectric at pressures in the range of 1 to 20 atmospheres, before being sealed. It should be noted however, that other pressure ranges are possible, and that the range of 1 to 20 atmospheres is presented as an exemplary embodiment. This embodiment is described in further detail below with respect to FIG. 2.

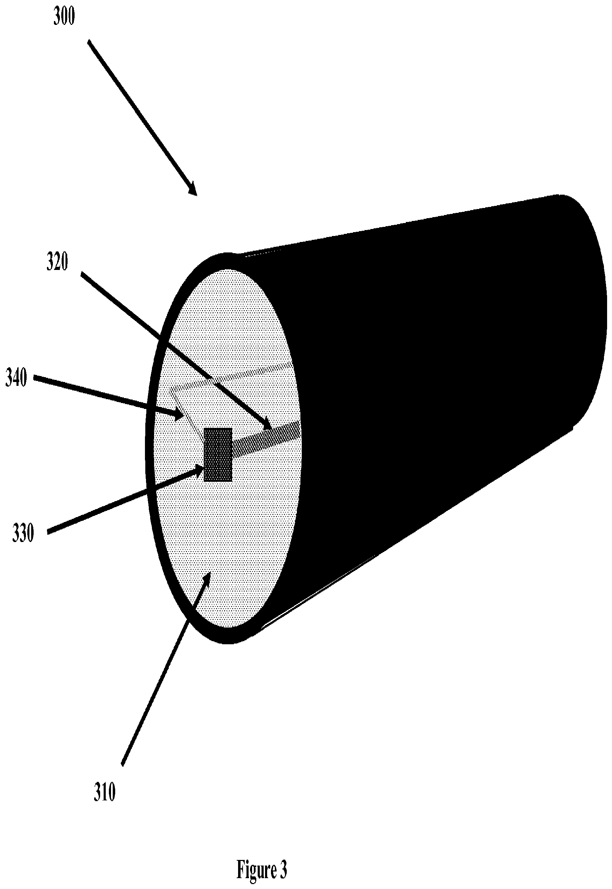

In another system not forming part of the present invention, the LDs comprise a scintillating material and wavelength shifting fibers to absorb and transmit the scintillation light to periodic detectors along the length of the detector. This system is described in further detail below with reference to FIG. 3.

The present invention is directed towards multiple embodiments. The following disclosure is provided in order to enable a person having ordinary skill in the art to practice the invention. Language used in this specification should not be interpreted as a general disavowal of any one specific embodiment or used to limit the claims beyond the meaning of the terms used therein. The general principles defined herein may be applied to other embodiments and applications without departing from the scope of the invention. Also, the terminology and phraseology used is for the purpose of describing exemplary embodiments and should not be considered limiting. For purpose of clarity, details relating to technical material that is known in the technical fields related to the invention have not been described in detail so as not to unnecessarily obscure the present invention.

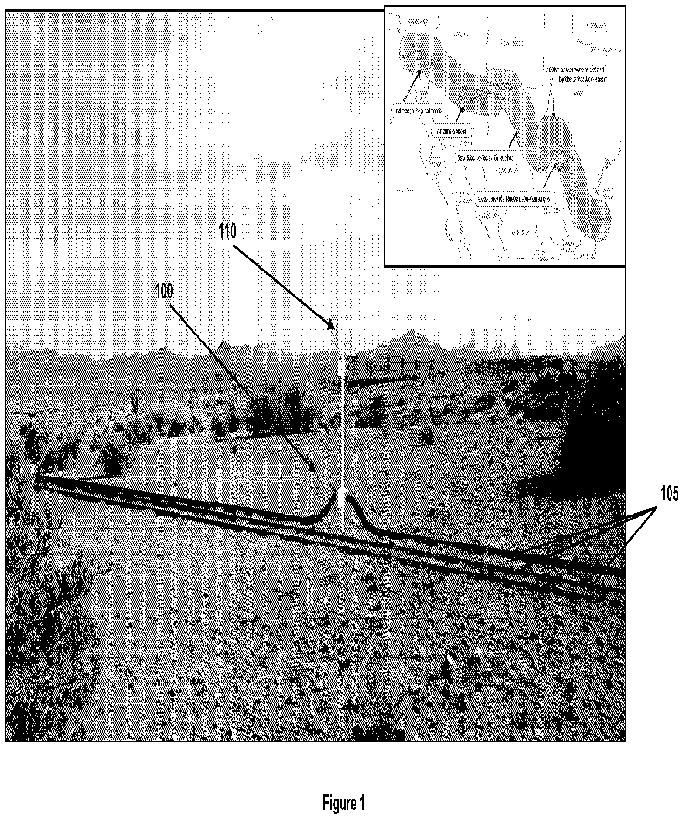

FIG. 1 shows radiological threat monitoring system 100 in accordance with an embodiment of the present invention. The system 100 comprises a plurality of Long Detector cables 105 (hereinafter referred to as 'LDs') each of which is connected to base stations 110 at one or both ends, for radiation induced signal readout. In an embodiment, an LD stretching up to a mile with readout at both ends is employed. In various embodiments, the range of a base station may vary between several hundred feet to several miles and the number of base stations employed over a stretch of LD depends upon cost to efficiency ratios. In one embodiment, the system 100 employs redundancy, such as by using more than one line of LDs 105. In one embodiment, the LDs are Panofsky Long Ion Chambers (PLICs), and the base stations 110 comprise read-out electronics to detect and measure ionization current signals induced due to movement of ions or charged carriers within the LDs 105 as a result of an 'ionization event'. An 'ionization event' comprises radiological/fissile threat material, such as radiological or 'Special Nuclear Material' (SNM), coming in the vicinity of the LDs 105 and inducing ionization current within the LDs 105 as a result of ionizing radiations from the radiological threat materials. In another system, the LDs contain a scintillating substance, and the base stations 110 comprise read-out electronics receiving signals from light-sensitive elements in the cable, which collect optical photons from the scintillating substance as a result of an 'ionization event', as defined herein. In one embodiment, the LDs are elongated cables which house, within their interior, at least one ionization chamber.

According to an aspect of the present invention, the base stations 110 are in communication with a central station or location (not shown) through wired and/or wireless network connectivity, including by cable, wireless, cellular, or satellite transmission. In one embodiment, fiber optic pathways are strung along the LDs 105 thereby connecting the base stations 110 to a central monitoring and/or data gathering station or location.

The radiological threat monitoring system 100 of the present invention is deployable in a plurality of situations to detect and monitor radiological threats. In one embodiment the system 100 is deployed for protection of open borders between countries, such as the entire US-Mexican border where the LDs 105 are embedded along the borders and/or border crossing roads, lengthwise. The system 100 of the present invention advantageously utilizes the ability to construct and deploy sufficiently long LDs 105 at reasonable costs that can withstand harsh environmental conditions.

In an embodiment, when used for open border protection, the base station 110 is unattended and operated from a rechargeable battery, with solar cells for recharging during periods of daylight, and infrared cameras to monitor the area visually. In an alternate embodiment, the base stations 110 are grid-powered. In one embodiment, the system 100 detects radiological threat materials being carried by a person walking across the border or road thereby causing the radiological threat materials to enter into the vicinity of the deployed LDs 105. Due to the nature of radiological and nuclear materials, the ability to detect threat materials increases by a factor of four with each factor two decrease in the distance between the threat materials and the LDs. Hence, it is required that the detector be as close to the threat material as possible, which is achieved by the present invention wherein the detector-to-threat-material distance is unavoidably very small. For example, when carried in a backpack, that distance is, in one embodiment, of the order of three to five feet at the point of closest approach.

The LDs 105 can also be deployed along, or embedded in, sections of roads at international or state borders, at strategic positions at the periphery of or within cities, as well as in or near other locations that may represent targets of opportunity, such as near the White House or state capitols. In one embodiment, the system 100 is used for unobtrusive, passive scanning of vehicular traffic. As an example, if one mile of roadway is equipped with one or more LDs, a vehicle traveling at 60 miles per hour can be passively scanned for a duration of one minute.

In one embodiment, the LDs 105 are laid on the ground, such as by attaching to stakes. In another embodiment, the LDs 105 are hung from poles, such as those used for electrical wiring. In yet other embodiments, the LDs 105 are embedded in covered tracks in the pavement, particularly when deployed in a roadway. LDs can be embedded in the roadway up to a few inches in depth. Embedding them much deeper is possible, but the pavement and overburden constitute a shield for the radiation emanating from the threat materials, and deeper burial will lead to lower sensitivity of the LDs.

According to another aspect of the present invention, the system 100 of the present invention uses sensors to detect tampering attempts, such as attempts to cut the LDs 105. In one embodiment, the sensors (not shown) are located within the base stations. In order to detect cutting of an LD, one can use a plurality of methods. One method is to periodically send a signal through the cable, and wait for the reflected signal to come back, where the time difference from when the signal is sent through the cable to when the reflected signal returns is a measure of the length of the cable. A broken or cut cable leads to the absence of the reflected signal and/or an anomalous time difference. Another method is by connecting the LD to two base stations, one on either end, and to periodically send a signal from one base station to the other. A broken or cut cable results in the signal not arriving at the second base station. Another exemplary method involves monitoring the background radiation levels detected by each LD. If no background signal is detected within a predefined time, the LD may be dysfunctional. Alternatively, if an enormous signal is detected, the LD may be defective, or it may be detecting the presence of a threat. In either case, an alarm is appropriate since further action is required. There are many other methods to detect a breach in the cable, as are known to those skilled in electrical circuit maintenance.

Systems are also present to monitor tampering with base stations 110. In one embodiment, a status message is periodically sent to a central location. In an embodiment, the status message is encoded and/or contains a sequence number. A broken or tampered-with base station will either send a status message stating that one or more of its systems is non-functional or will fail to send a status message entirely, In an embodiment, a broken or tampered-with base station may send an incorrectly encoded message. Either a status message indicating that one or more systems is non-functional or no status message at all is an event that causes an alarm.

In one embodiment, the system 100 of the present invention is redundant and employs a plurality of parallel LDs 105. In one embodiment, the system 100 of the present invention is triply redundant and employs three parallel LDs, 105. In various embodiments, the present invention employs at least three LDs to make the system redundant because if only two LDs are employed and the signals therein differ, it would not be possible to detect which of the two signals is correct. Hence, three or more LDs are used so that it is possible to detect if one of them is reading an anomalous signal not substantiated by the others.

In one embodiment, the LDs 105 are Panofsky Long Ion Chambers (hereinafter referred to as 'PLICs') which are air or gas-filled coaxial cables supplied with a high voltage. FIG. 2 shows a cross-sectional view of an embodiment of a PLIC comprising coaxial cable 200 with an inner/central signal electrode 205 concentrically surrounded by an outer high-voltage electrode 215. The electrodes 205, 215 are separated from each other by a spacer 210 which surrounds the signal electrode 205, in one embodiment, in spiral or helical form, over the entire length of the coaxial cable 200.

In one embodiment, the spacer 210 is ceramic or synthetic material such as polyethylene, polypropylene, polyamide or any other synthetic material that is sufficiently resistant to high voltages and environmental hazards and evident to those skilled in the art. In an embodiment, the spacer is a helical plastic contraption which is the same length as the LD and occupies a minimum volume. The spacer holds the central conductor in place, but allows free flow of electrons and ions to anode and cathode.

The inner signal electrode 205 is, for example, a copper wire or a copper rod although any other conductive material known to those of ordinary skill in the art can be used. The surrounding high-voltage electrode 215 is a pipe, such as a copper pipe, which, under certain circumstances, can be a corrugated pipe. Persons of ordinary skill in the art would appreciate that in alternate embodiments, the inner electrode 205 is the high-voltage electrode while the outer electrode 215 is the signal electrode. In an embodiment, the diameters of the inner and outer electrodes range from 0.5 inches to 10 inches, the sensitivity of the device increasing with an increase in the diameters.

When used as a PLIC, the annular space between the two electrodes 205, 215 is filled with a radiation-ionizable dielectric, at pressures in the range of 1 to 20 atmospheres in one embodiment, and then sealed. The dielectric could be air or a gaseous mixture such as a mixture of 95% Argon and 5% CO₂, although many other gasses that are known to those skilled in the art could be used advantageously. A voltage of between 250V and 1000V is applied to the high-voltage electrode and read-out electronics are installed at one or both ends of the cable.

When a radiological material, such as nuclear or 'Special Nuclear Material' (SNM) comes into the vicinity of the PLIC, the radiation emitted from the nuclear or SNM material causes ionization of the dielectric. In the presence of the electrical field, positive ions produced are attracted to, and therefore undergo a pull in the direction of, the cathode (negatively charged conductor), and negative ions and electrons are attracted to, and therefore undergo a pull in the direction of, the anode (positively charged conductor). This ion attraction induces, across the electrodes, an ionization current signal, which is measured by the read-out electronics.

FIG. 3 shows a cross-sectional view of a Long Detector comprising a scintillating material, as an example not forming part of the present invention. As illustrated in FIG. 3, the LD 300 is a scintillation detector filled with a scintillating substance 310, in liquid or in flexible solid form. Scintillating substance 310 emits light when struck by ionizing radiation. Any available liquid or solid plastic fiber scintillating substance may be used. In one embodiment, the scintillating substance 310 is a liquid scintillator, and the emitted light is collected using wavelength-shifting fiber 320 and is transmitted to light sensitive detectors 330. Examples of light sensitive detectors 330 include photodiodes or photomultiplier tubes. In one example, the light sensitive detectors 330 are arranged periodically throughout the length of the LD 300. The light sensitive detectors 330 themselves are powered and communicate through at least one wire 340 running through the length of the LD 300. In another example a string of light sensitive detectors 330, such as photodiodes, is present throughout the length of the LD 300, powered and communicating through at least one wire 340 running through the length of the LD 300. In another example, the scintillating substance 310 comprises one or more scintillating fibers. The light produced inside the fibers is transported to one or more light sensitive detectors 330, positioned at intervals through the length of the LD 300, powered and communicating through at least one wire 340 running through the length of the LD 300. In other examples, an optically reflective coating is present on the inner surface of the LD 300 and surrounding the scintillating substance 310 and on any wires and objects that are not light-sensitive elements.

Referring back to FIG. 1, the LDs 105 act as position-sensitive detectors of an "ionization event" or plurality thereof, which are indicative of a subject carrying radiological material in the vicinity of the LDs. In one embodiment, the 'subject' is a person, vehicle or receptacle carrying unshielded or lightly shielded radiological/fissile threat material such as SNM. It is possible to shield radiological materials and SNM so that little ionizing radiation escapes the shield. In such a case, a standard LD is not sensitive to the materials as they are carried past the LD by a subject. However, proper shielding of a substantial amount of radiological material or SNM would be quite heavy, and would impractical to carry by one, or several, individuals. Thus, it is unlikely that a substantially shielded material would be carried across an LD by any subject.

In another embodiment, the LD contains the gas Boron-Fluoride (BF₃) and is surrounded by a moderator, such as polyethylene, which is a material capable of slowing down neutrons. Some radiological materials, and all SNM, emit neutrons in addition to gamma rays. Neutrons do not ionize gasses very well. After having slowed down in the moderator surrounding the LD, the neutrons react, however, with the nucleus of the Boron-10 atoms in the gas, and each Boron-10 nucleus then decays to a Lithium nucleus and an alpha particle. The Lithium nucleus and alpha particle are emitted at relatively high energy and are capable of ionizing the BF₃ gas. This ionization is then detected, as described above, as a current between the electrodes. When radiological materials and SNM are well-shielded for the emission of ionizing radiation such as gamma rays, the emitted neutrons will still easily penetrate such shielding. In another embodiment the inner surface of the outer conductor of the LD is coated with Boron, and filled with a gas such as the Argon/CO2 mixture discussed herein. In this case, after having slowed down in the moderator surrounding the LD, the neutrons react with the nucleus of the Boron-10 atoms in the coating, and each Boron-10 nucleus then decays to a Lithium nucleus and an alpha particle. The Lithium nucleus or the alpha particle are emitted at relatively high energy and are capable of ionizing the gas.

It is also possible to shield threat materials for the emission of neutrons. This is usually accomplished using large amounts of hydrogenous materials, such as polyethylene. When threat materials are well-shielded for both gamma rays and neutrons, they are difficult to detect by passive means, as is known in the art of passive detection. It is, however, unlikely that materials well-shielded for both gammas and neutrons can be hand-carried across terrestrial pathways because of weight and bulk.

When base stations 110 comprising read-out electronics are installed at only one end of the LDs 105, the other end is either left un-terminated or is terminated with a capacitor for the ionization current or signal traveling in that direction, which is subsequently reflected to the base station end. For single ionization events or multiple events that happen very quickly, the difference in arrival time between the direct signal and the reflected signal provides an indication of where, along LD cables 105, the event(s) occurred.

In another embodiment, base stations 110 comprising read-out electronics are installed at both ends of the LD cables 105. This configuration is used to detect the presence of radioactive materials that are carried by one or more persons walking in a roughly perpendicular direction to the LDs 105 resulting in a series of 'ionization events' - first increasing and then decreasing in frequency and/or intensity. In such a scenario, it is possible that during the maximum intensity, individual signals are inseparable, which might lead to problems in determining the location of the signal along the LD cables using reflection alone. To overcome this challenge, read-out sub stations 110 are provided at both ends of the LD cables 105 that utilize the timing results of ionization current signals reaching both ends to determine the location of the 'ionization events'.

In another embodiment, the base stations 110 collect signals from light-sensitive elements embedded in the cable. The light-sensitive elements can be constructed to transmit position information, by the addition of suitable electronics, as will be obvious to those of ordinary skill in the art.

It should be noted that a LD will also be subject to radiation that is normally occurring in the background, either from naturally radioactive materials present in the environment, or from cosmic radiation, or from ionizing radiation produced by lightning. These events, however, occur at random locations along the length of the LD, whereas the passage of radiological material or SNM happens at one or more particular locations with a predictable time signature, allowing the system to differentiate between natural background and the passage of radiological materials or SNM.

LDs are, by their nature, not the most sensitive radiation detectors, and a significant amount of radioactive material must be used in order to provide a detectable signal. The sensitivity of LDs can be improved, as is known to those skilled in the art, by a number of means, including using a higher voltage across the electrodes, or a higher pressure of the gas, or the use of other gasses.

In one embodiment, the LD is operated at very high voltage, as more of a Geiger tube, where an ionizing event leads to the breakdown of the gas as a spark. It is then necessary to protect the LD from damage, by ensuring that the voltage across the electrodes drops quickly so that the spark is not unduly sustained. This can be achieved by putting a resistor in line with the high-voltage supply: as soon as an appreciable current flows between the electrodes, that current also drops the voltage across the electrodes. If the current is due to a spark, the reduced voltage leads to the termination of the spark.

In another embodiment, the LD is operated at moderately high voltage, but the inner (positively charged) conductor (the anode) is modified in that it has sharp protrusions along its entire length. Such a configuration is known in the art as a "drift chamber". In one embodiment, the protrusions are created by wrapping a very thin conductive wire around the main inner conductor, the thin wire providing the protrusion. In another embodiment, the inner conductor has multiple tiny spikes along its entire surface. These protrusions serve to increase the gradient of the electric field locally. Electrons drifting through the gas to the anode will accelerate in the areas of high electric field gradient, and cause surrounding gas molecules to ionize, in a process known to the art as "gas amplification". This gas amplification serves to increase the sensitivity of the device.

The above examples are merely illustrative of the many applications of the system of present invention. Although only a few embodiments of the present invention have been described herein, it should be understood that the present invention might be embodied in many other specific forms without departing from the scope of the invention. Therefore, the present examples and embodiments are to be considered as illustrative and not restrictive, and the invention may be modified within the scope of the invention as defined by the appended claims.

## Claims

1. A radiological threat material detection system (100), comprising:
a. at least one cable (105) having an enclosed, elongated interior volume for carrying an ionization current signal that is induced within the at least one cable by a radiological material emitting ionizing radiation when the radiological material is within a predefined distance from the at least one cable; and
b. at least one detector coupled with the at least one cable for measuring the induced ionization current signal, wherein the at least one detector records the measured signal.

2. The system of claim 1 wherein the radiological material is a fissile material.

3. The system of claim 1 wherein the cable is a Panofsky Long Ion Chamber.

4. The system of claim 1 further comprising a second cable having an enclosed, elongated interior volume for carrying an ionization current that is induced within the second cable by a radiological material emitting ionizing radiation when the radiological material is within a predefined distance from the second cable.

5. The system of claim 4 wherein the first cable is parallel to the second cable.

6. The system of claim 4 further comprising a second detector coupled to the second cable for measuring a signal corresponding to the induced ionization current, wherein the second detector records the measured signal.

7. The system of claim 6 wherein a monitoring station is in data communication with the at least one detector and second detector.

8. The system of claim 1 further comprising at least one sensor adapted to detect an attempt to tamper with the system, wherein said at least one sensor is adapted to detect a severing of the at least one cable by periodically sending a signal through the at least one cable, to detect when the signal is reflected by an end of the at least one cable; to determine a severing of the at least one cable when the reflected signal is not detected; to calculate a time difference between a time of sending the signal and a time of receiving the reflected signal; and to detect a severing of the at least one cable if the reflected signal is received before a predefined time period, wherein the predefined time period is dependent upon a length of the at least one cable.

9. The system of claim 8 wherein the at least one sensor periodically sends a predefined status message conveying an operational status of said system to a monitoring station, wherein the monitoring station determines that the system is malfunctioning if the status message is not received at a predefined time interval.

10. The system of claim 1 wherein the at least one cable comprises a gas-filled coaxial cable (200) adapted to carry a voltage, wherein said coaxial cable comprises at least one inner signal electrode (205) concentrically surrounded by at least one outer electrode (215), wherein the inner and outer electrodes are separated by a spacer (210) surrounding the inner electrode, and wherein the outer electrode is at a higher voltage compared to the inner electrode.

11. The system of claim 10 wherein the spacer is a ceramic material resistant to high voltages; or
wherein the inner electrode comprises a conductive material; or
wherein the spacer comprises a radiation ionizable dielectric at pressures in the range of 1 to 20 atmospheres before being sealed.

12. The system of any preceding claim wherein the system is configured to determine, based upon the measured signal, whether radiological material is present within the predefined distance from the at least one cable; and/or
wherein the system is configured to differentiate between natural background and the passage of radiological materials.

13. A method of detecting radiological material, comprising:
a. Positioning at least one cable (105) having an enclosed, elongated interior volume for carrying an ionization current signal that is induced within the at least one cable by a radiological material emitting ionizing radiation when the radiological material is within a predefined distance from the at least one cable;
b. Measuring the induced ionization current signal using at least one detector coupled with the at least one cable; and
c. Determining, based upon said measurement, whether radiological material is present within the predefined distance from the at least one cable.

14. The method of claim 13 wherein:
the at least one cable is positioned proximate to vehicular traffic to passively scan vehicular traffic for radiological material and the at least one cable is positioned by embedding it within a section of paved road; or
the at least one cable is positioned by laying it on the ground and attached to a plurality of stakes; or
the at least one cable is positioned by hanging it from a plurality of poles.

15. The method of claim 13 further comprising positioning a second cable having an enclosed, elongated interior volume for carrying an ionization current that is induced within the second cable by a radiological material emitting ionizing radiation when the radiological material is within a predefined distance from the second cable, wherein the first cable is positioned parallel to the second cable, and further comprising measuring a signal corresponding to the induced ionization current in the second cable using a second detector.

## Patentansprüche

1. Detektierungssystem für Radioaktivitätsbedrohungsmaterial (100), umfassend:
a. mindestens ein Kabel (105) mit einem umschlossenen länglichen Innenvolumen, um ein Ionisierungsstromsignal zu führen, das innerhalb des mindestens einen Kabels durch ein Radioaktivitätsmaterial induziert wird, das ionisierende Strahlung emittiert, wenn sich das Radioaktivitätsmaterial innerhalb eines vorbestimmten Abstands zu dem mindestens einen Kabel befindet; und
b. mindestens einen Detektor, der an das mindestens eine Kabel gekoppelt ist, um das induzierte Ionisierungsstromsignal zu messen, wobei der mindestens eine Detektor das gemessene Signal aufzeichnet.

2. Verfahren nach Anspruch 1, wobei das Radioaktivitätsmaterial ein spaltbares Material ist.

3. System nach Anspruch 1, wobei das Kabel eine lange Ionenkammer nach Panofsky ist.

4. System nach Anspruch 1, des Weiteren umfassend ein zweites Kabel mit einem umschlossenen länglichen Innenvolumen, um ein Ionisierungsstromsignal zu führen, das innerhalb des zweiten Kabels durch ein Radioaktivitätsmaterial induziert wird, das ionisierende Strahlung emittiert, wenn sich das Radioaktivitätsmaterial innerhalb eines vorbestimmten Abstands zu dem zweiten Kabel befindet.

5. System nach Anspruch 4, wobei das erste Kabel parallel zu dem zweiten Kabel ist.

6. System nach Anspruch 4, des Weiteren umfassend einen zweiten Detektor, der an das zweite Kabel gekoppelt ist, um ein Signal zu messen, welches dem induzierten Ionisierungsstrom entspricht, wobei der zweite Detektor das gemessene Signal aufzeichnet.

7. System nach Anspruch 6, wobei eine Überwachungsstation in Datenkommunikation mit dem mindestens einen Detektor und dem zweiten Detektor steht.

8. System nach Anspruch 1, des Weiteren umfassend mindestens einen Sensor, der adaptiert ist, um einen Versuch zur Sabotage des Systems zu detektieren, wobei der mindestens eine Sensor adaptiert ist, um ein Durchtrennen des mindestens einen Kabels zu detektieren, indem periodisch ein Signal durch das mindestens eine Kabel gesendet wird, um zu detektieren, wenn das Signal durch ein Ende des mindestens einen Kabels reflektiert wird; um ein Durchtrennen des mindestens einen Kabels zu ermitteln, wenn das reflektierte Signal nicht detektiert wird; um eine Zeitdifferenz zwischen einer Zeit des Sendens des Signals und einer Zeit des Empfangens des reflektierten Signals zu berechnen; und um ein Durchtrennen des mindestens einen Kabels zu detektieren, wenn das reflektierte Signal vor einer vordefinierte Zeitspanne empfangen wird, wobei die vordefinierte Zeitspanne von einer Länge des mindestens einen Kabels abhängt.

9. System nach Anspruch 8, wobei der mindestens eine Sensor periodisch eine vordefinierte Statusmeldung, die einen Operationsstatus des Systems transportiert, an eine Überwachungsstation sendet, wobei die Überwachungsstation ermittelt, dass das System nicht korrekt funktioniert, falls die Statusmeldung nicht innerhalb eines vordefinierten Zeitintervalls empfangen wird.

10. System nach Anspruch 1, wobei das mindestens eine Kabel ein gasgefülltes Koaxialkabel (200) umfasst, das adaptiert ist, um eine Spannung zu führen, wobei das Koaxialkabel mindestens eine innere Signalelektrode (205) umfasst, die konzentrisch von mindestens einer äußeren Elektrode (215) umgeben ist, wobei die innere und die äußere Elektrode durch ein Distanzstück (210) getrennt sind, welches die innere Elektrode umgibt, und wobei die äußere Elektrode, verglichen mit der inneren Elektrode, auf einer höheren Spannung ist.

11. System nach Anspruch 10, wobei das Distanzstück ein Keramikstück ist, das hochspannungsbeständig ist; oder
wobei die innere Elektrode ein leitfähiges Material umfasst; oder
wobei das Distanzstück ein strahlungsionisierbares Dielektrikum bei Drücken im Bereich von 1 bis 20 Atmosphären umfasst, bevor es versiegelt wird

12. System nach einem der vorhergehenden Ansprüche, wobei das System ausgestaltet ist, um basierend auf dem gemessenen Signal zu ermitteln, ob Radioaktivitätsmaterial innerhalb des vordefinierten Abstands zu dem mindestens einen Kabel vorhanden ist; und/oder
wobei das System ausgestaltet ist, um zwischen natürlichem Hintergrund und dem Durchgang von Radioaktivitätsmaterialien zu unterscheiden.

13. Verfahren zum Detektieren von Radioaktivitätsmaterial, umfassend:
a. Positionieren von mindestens einem Kabel (105) mit einem umschlossenen länglichen Innenvolumen, um ein Ionisierungsstromsignal zu führen, das innerhalb des mindestens einen Kabels durch ein Radioaktivitätsmaterial induziert wird, das ionisierende Strahlung emittiert, wenn sich das Radioaktivitätsmaterial innerhalb eines vorbestimmten Abstands zu dem mindestens einen Kabel befindet;
b. Messen des induzierten Ionisationsstromsignals unter Verwendung von mindestens einem Detektor, der mit dem mindestens einen Kabel gekoppelt ist; und
c. Ermitteln basierend auf der Messung, ob Radioaktivitätsmaterial innerhalb des vordefinierten Abstands zu dem mindestens einen Kabel vorhanden ist.

14. Verfahren nach Anspruch 13, wobei:
das mindestens eine Kabel in der Nähe von Fahrzeugverkehr positioniert wird, um Fahrzeugverkehr passiv auf Radioaktivitätsmaterial zu scannen, und wobei das mindestens eine Kabel positioniert wird, indem es in einen Abschnitt einer gepflasterten Straße eingebettet wird; oder
das mindestens eine Kabel positioniert wird, indem es auf den Boden gelegt und an einer Vielzahl von Pflöcken befestigt wird; oder
das mindestens eine Kabel positioniert wird, indem es von einer Vielzahl von Stangen hängen gelassen wird.

15. Verfahren nach Anspruch 13, des Weiteren umfassend Positionieren eines zweiten Kabels mit einem umschlossenen länglichen Innenvolumen, um einen Ionisierungsstrom zu führen, der innerhalb des zweiten Kabels durch ein Radioaktivitätsmaterial induziert wird, welches ionisierende Strahlung emittiert, wenn sich das Radioaktivitätsmaterial innerhalb eines vordefinierten Abstands zu dem zweiten Kabel befindet, wobei das erste Kabel parallel zu dem zweiten Kabel positioniert ist, und des Weiteren umfassend Messen eines Signals, das dem induzierten Ionisierungsstrom entspricht, in dem zweiten Kabel unter Verwendung eines zweiten Detektors.

## Revendications

1. Système de détection de matière constituant une menace radiologique (100), comprenant :
a. au moins un câble (105) ayant un volume intérieur allongé fermé destiné à transporter un signal de courant d'ionisation qui est induit à l'intérieur de l'au moins un câble par une matière radiologique émettant un rayonnement ionisant quand la matière radiologique est à moins d'une distance prédéfinie de l'au moins un câble ; et
b. au moins un détecteur couplé à l'au moins un câble pour mesurer le signal de courant d'ionisation induit, l'au moins un détecteur enregistrant le signal mesuré.

2. Système de la revendication 1 dans lequel la matière radiologique est une matière fissile.

3. Système de la revendication 1 dans lequel le câble est une chambre à ions longue de Panofsky.

4. Système de la revendication 1 comprenant en outre un deuxième câble ayant un volume intérieur allongé fermé destiné à transporter un courant d'ionisation qui est induit à l'intérieur du deuxième câble par une matière radiologique émettant un rayonnement ionisant quand la matière radiologique est à moins d'une distance prédéfinie du deuxième câble.

5. Système de la revendication 4 dans lequel le premier câble est parallèle au deuxième câble.

6. Système de la revendication 4 comprenant en outre un deuxième détecteur couplé au deuxième câble pour mesurer un signal correspondant au courant d'ionisation induit, le deuxième détecteur enregistrant le signal mesuré.

7. Système de la revendication 6 dans lequel un poste de surveillance est en communication de données avec l'au moins un détecteur et le deuxième détecteur.

8. Système de la revendication 1 comprenant en outre au moins un capteur adapté pour détecter une tentative de sabotage du système, ledit au moins un capteur étant adapté pour détecter un sectionnement de l'au moins un câble en envoyant périodiquement un signal à travers l'au moins un câble, pour détecter le moment où le signal est réfléchi par une extrémité de l'au moins un câble ; pour déterminer un sectionnement de l'au moins un câble quand le signal réfléchi n'est pas détecté ; pour calculer une différence de temps entre un moment d'envoi du signal et un moment de réception du signal réfléchi ; et pour détecter un sectionnement de l'au moins un câble si le signal réfléchi est reçu avant un laps de temps prédéfini, le laps de temps prédéfini dépendant d'une longueur de l'au moins un câble.

9. Système de la revendication 8 dans lequel l'au moins un capteur envoie périodiquement un message d'état prédéfini transportant un état opérationnel dudit système à un poste de surveillance, le poste de surveillance déterminant que le système dysfonctionne si le message d'état n'est pas reçu dans un intervalle de temps prédéfini.

10. Système de la revendication 1 dans lequel l'au moins un câble comprend un câble coaxial rempli de gaz (200) adapté pour transporter une tension, ledit câble coaxial comprenant au moins une électrode de signal interne (205) entourée concentriquement par au moins une électrode externe (215), les électrodes interne et externe étant séparées par une entretoise (210) entourant l'électrode interne, et l'électrode externe étant à une plus haute tension que l'électrode interne.

11. Système de la revendication 10 dans lequel l'entretoise est un matériau céramique résistant aux hautes tensions ; ou
dans lequel l'électrode interne comprend un matériau conducteur ; ou
dans lequel l'entretoise comprend un diélectrique ionisable par rayonnement à des pressions dans la gamme de 1 à 20 atmosphères avant d'être scellé.

12. Système d'une quelconque revendication précédente, le système étant configuré pour déterminer, sur la base du signal mesuré, si de la matière radiologique est présente à moins de la distance prédéfinie de l'au moins un câble ; et/ou
le système étant configuré pour établir une distinction entre le bruit de fond naturel et le passage de matières radiologiques.

13. Procédé de détection de matière radiologique, comprenant :
a. le positionnement d'au moins un câble (105) ayant un volume intérieur allongé fermé destiné à transporter un signal de courant d'ionisation qui est induit à l'intérieur de l'au moins un câble par une matière radiologique émettant un rayonnement ionisant quand la matière radiologique est à moins d'une distance prédéfinie de l'au moins un câble ;
b. la mesure du courant d'ionisation induit au moyen d'au moins un détecteur couplé à l'au moins un câble ; et
c. la détermination, sur la base de ladite mesure, que de la matière radiologique est présente ou non à moins de la distance prédéfinie de l'au moins un câble.

14. Procédé de la revendication 13 dans lequel :
l'au moins un câble est positionné à proximité d'un trafic de véhicules pour inspecter passivement le trafic de véhicules pour de la matière radiologique et l'au moins un câble est positionné en l'incorporant dans une section de route revêtue ; ou
l'au moins un câble est positionné en le posant au sol et attaché à une pluralité de piquets ; ou
l'au moins un câble est positionné en le suspendant depuis une pluralité de poteaux.

15. Procédé de la revendication 13 comprenant en outre le positionnement d'un deuxième câble ayant un volume intérieur allongé fermé destiné à transporter un courant d'ionisation qui est induit à l'intérieur du deuxième câble par une matière radiologique émettant un rayonnement ionisant quand la matière radiologique est à moins d'une distance prédéfinie du deuxième câble, le premier câble étant positionné parallèlement au deuxième câble, et comprenant en outre la mesure d'un signal correspondant au courant d'ionisation induit dans le deuxième câble au moyen d'un deuxième détecteur.
